# EUROPÄISCHE PATENTSCHRIFT

(11) **EP 3 217 035 B1**
(45) Veröffentlichungstag und Bekanntmachung des Hinweises auf die Patenterteilung: **30.10.2019**
(21) Anmeldenummer: 17159953.3
(22) Anmeldetag: 08.03.2017
(51) Int. Cl.: F16F 7/116, F16F 7/10, B62D 15/02, B62D 1/04

(54) **SCHWINGERREGER**
VIBRATION GENERATOR
POT VIBRANT

(30) Priorität: 09.03.2016 DE 102016104328
(43) Veröffentlichungstag der Anmeldung: 13.09.2017
(73) Patentinhaber: Vibracoustic GmbH, 64293 Darmstadt (DE)
(72) Erfinder: Dr. Eckel, Hans-Gerd, 69514 Laudenbach (DE); Müller, Niklas, 79241 Ihringen (DE)
(74) Vertreter: Flügel Preissner Schober Seidel

(56) Entgegenhaltungen:
- WO-A2-00/49309
- US-A- 6 006 875
- US-A1- 2015 021 129

## Beschreibung

Die vorliegende Erfindung betrifft einen Schwingerreger für ein Kraftfahrzeuglenkrad, insbesondere für eine Nabe eines Kraftfahrzeuglenkrads.

Moderne Kraftfahrzeuge weisen Assistenzsystems auf, die den Fahrer bei Sekundenschlaf, Verlassen der Fahrspur ohne zu blinken oder Fahrzeuge im toten Winkel warnen, indem das Lenkrad in Vibration versetzt wird. Zur Erzeugung der Vibrationen wird ein Schwingerreger der eingangs genannten Art in ein Kraftfahrzeuglenkrad integriert. Dieser Schwingerreger kann auch als Unwuchterreger ausgeführt sein.

Aus DE 10 2004 043 135 B3 geht ein derartiger Schwingerreger hervor, der als ein linearer Aktuator ausgebildet ist. Der Schwingerreger weist ein Auflager auf, welches durch eine Einrichtung mit einer Tilgermasse relativ zueinander federnd bewegbar verbunden ist. Die Tilgermasse ist durch die Einrichtung derart geführt bewegbar, dass sie Bewegungen des Auflagers mittels einer Tauchspulenanordnung entgegenwirkt. Die Tauchspulenanordnung umfasst eine Spule und einen Eisenkern mit mindestens einem Permanentmagneten, wobei der Eisenkern der Tilgermasse zugeordnet ist und die Spule dem Auflager zugeordnet ist. Die Tilgermasse ist durch Federelemente geführt bewegbar, wobei die Federelemente als Blattfedern ausgebildet sind, die in mindestens zwei parallelen Ebenen liegen. In jeder Ebene sind drei Blattfedern in Form von Kreisringsegmenten derart in Anschlägen festgelegt, dass sie einen Kreisring definieren. Die Tilgermasse ist zu Schwingungen in einem weiten Frequenzbereich anregbar.

US 6,006,875 A zeigt einen Schwingungstilger umfassend ein Gehäuse und eine zylindrische elektromagnetische Kernanordnung. Die Kernanordnung umfasst eine Mittelwelle und zwei Endabschnitte. Die Kernanordnung ist über Federn mit einem weiteren Gehäuse verbunden. Die auf den Schwingungstilger wirkenden Schwin gungen werden über die Welle eingebracht. Das Gehäuse fungiert als Tilgermasse. Die Kernanordnung vibriert ebenso in axialer Richtung, um als elektrischtunender Schwingungstilger zu wirken. Das elektromagnetische System der Kernanordnung wirkt demnach zusätzlich axial zu dem mechanischen Federsystem.

Bei dem aus dem Stand der Technik bekannten Schwingerreger sind für eine ordnungsgemäße Funktionsweise kleine Luftspalte zwischen den bewegten Teilen notwendig. Zur Einhaltung der kleinen Luftspalte ist jedoch eine präzise Montage erforderlich.

Ferner geht aus US 2015/0021129 A1 ein Schwingungstilger hervor, der eine Trageinrichtung, eine Schwungmasse, mindestens zwei Spuleneinrichtungen, die jeweils mindestens eine Wicklung umfassen, eine einzige Permanentmagneteinrichtung und einem einzigen Permanentmagneten aufweist. Die Schwungmasse ist über einen Federkörper mit der Trageinrichtung verbunden, wobei der Federkörper aus einem elastischen Material besteht, so dass die Schwungmasse gegenüber der Trageinrichtung schwingen kann. Der Permanentmagnet erzeugt ein Magnetfeld, wobei eine aus einem ferromagnetischen Material hergestellte Jocheinrichtung derart angeordnet ist, dass das von dem Permanentmagneten erzeugte Magnetfeld von der Jocheinrichtung geführt durch einen Teil der Wicklungen verläuft, so dass bei geeignet stromdurchflossenen Wicklungen zwei Kräfte erzeugbar sind, die zwischen der Trageinrichtung und der Permanentmagneteinrichtung wirken und die Schwungmasse gegenüber der Trageinrichtung bewegen. Die Relativbewegung der Schwungmasse gegenüber der Trageinrichtung erfolgt in einer Ebene, die von den Stirnflächen der Spulenkörper aufgespannt wird.

Eine Aufgabe der Erfindung ist es, einen Schwingerreger zu schaffen, der einfach zu montieren und kostengünstig in der Herstellung ist.

Zur Lösung der Aufgabe wird ein Schwingerreger nach Anspruch 1 vorgeschlagen.

Vorteilhafte Ausgestaltungen des Schwingerregers sind Gegenstand der abhängigen Ansprüche.

Es wird ein Schwingerreger für ein Kraftfahrzeuglenkrad vorgeschlagen, der ein Gehäuse und einen Aktor aufweist, der zur Erzeugung von Schwingungen bewegbar innerhalb des Gehäuses angeordnet ist, wobei der Aktor einen Elektromagneten aufweist, wobei dem Aktor axial beabstandet zwei Anziehelemente aus einem ferromagnetischen Werkstoff zugeordnet sind, wobei zwischen dem Aktor und den Anziehelementen derart eine magnetische Anziehungskraft erzeugbar ist, dass sich der Aktor hin und her bewegt, und wobei der Aktor als eine Pendelvorrichtung ausgebildet ist und sich gegen die Kraft gegeneinander wirkender Federelemente hin und her bewegt. Erfindungsgemäß ist erkannt worden, dass das nichtlineare Anziehen eines Elektromagneten von ferromagnetischen Anziehelementen als Schwingungsantrieb für die Warnfunktion ausreichend ist. Vorteilhaft wird der Aktor mit Wechselstrom bestromt, der insbesondere eine Frequenz von 50 Hz aufweist, so dass abwechselnd zwischen einem der Anziehelemente und dem Elektromagneten eine magnetische Anziehungskraft erzeugt wird. Dadurch bewegt sich der Aktor innerhalb des Gehäuses hin und her und erzeugt so Schwingungen, die für den Fahrer als Vibrationen spürbar sind. Vorteilhaft ist der Strom so eingestellt, dass ein Anschlagen des Elektromagneten an den Anziehelementen vermieden wird. Dadurch sind keine störenden Geräusche nach außen wahrnehmbar. Darüber hinaus ist es nicht erforderlich, zwischen den bewegten Teilen enge Toleranzen einzuhalten, so dass der Schwingerreger kostengünstig herstellbar ist. Zudem kommt der Schwingerreger infolge seines nichtlinearen ferromagnetischen Anziehkonzepts mit kleinem Bauraum aus, wodurch der Schwingerreger klein und preiswert realisierbar ist.

Vorteilhaft bestimmen die Federelemente und die translatorische und rotatorische Trägheit der beteiligten Pendelmassen die Pendeleigenfrequenz. Während der Bestromung des Aktors mit Wechselstrom wird dieser abwechselnd von der dominanten Seite angezogen, wobei sich der Aktor gegen die Kraft der Federelemente bewegt. Dadurch erzeugt der Aktor eine Pendelbewegung. Die zwischen dem Elektromagneten und dem Anziehelement erzeugte magnetische Kraft ist anfänglich größer als die Federkräfte der vorgespannten Federelemente, so dass die Kraft eines der Federelemente erhöht wird, während die Kraft des anderen Federelements verringert wird. Die Federelemente weisen bevorzugt eine lineare Kraft-Weg-Kennlinie auf.

In einer vorteilhaften Ausgestaltung weist die Pendelvorrichtung eine Pendeleigenfrequenz auf, wobei die Pendeleigenfrequenz zwischen ca. 10 Hz und ca. 100 Hz beträgt. Weiterhin vorteilhaft beträgt die Pendeleigenfrequenz zwischen ca. 40 Hz und ca. 60 Hz. Es hat sich herausgestellt, dass der Mensch sehr sensitiv auf derartige Schwingungsfrequenzen reagiert, so dass eine für den Fahrer deutlich spürbare Vibration zur Realisierung einer Warnfunktion erzeugt wird.

In einer vorteilhaften Ausgestaltung sind die Federelemente als Schraubenfedern ausgebildet. Eine Schraubenfeder ist im Vergleich zu einer Blattfeder weitaus weniger toleranzempfindlich. Vorteilhaft weisen die als Schraubenfedern ausgebildeten Federelemente eine lineare Kraft-Weg-Kennlinie auf.

Vorteilhaft liegen die Federelemente unter Vorspannung an dem Gehäuse und dem Aktor an. In einer vorteilhaften Ausgestaltung stützen sich die Federelemente an dem Gehäuse und dem Aktor ab. Weiterhin vorteilhaft ist der Aktor zwischen den Federelementen angeordnet.

In einer vorteilhaften Ausgestaltung sind die Anziehelemente als Blechelemente ausgebildet. Blechelemente stellen kostengünstige Anziehelemente dar. Vorteilhaft sind die Blechelemente mit dem Gehäuse verbunden. Die Blechelemente sind beidseits des Aktors angeordnet. Darüber hinaus können die Blechelemente Befestigungsabschnitte aufweisen, über die der Schwingerreger mit dem Kraftfahrzeuglenkrad, insbesondere der Nabe des Kraftfahrzeuglenkrads, verbunden werden kann. Hierzu ragen die Befestigungsabschnitte vorteilhaft aus dem Gehäuse. Vorteilhaft ist der Aktor schwenkbar um einen Stift gelagert. Weiterhin vorteilhaft ist der Stift mit dem Gehäuse verbunden. Hierzu kann das Gehäuse mit Öffnungen versehen sein, in welche der Stift durch das Gehäuse hindurchgeführt wird. Weiterhin vorteilhaft ist zwischen dem Aktor und dem Stift ein Gleitlager angeordnet. Das Gleitlager reduziert die Reibung zwischen dem Aktor und dem Stift, um eine leichtgängige Schwenkbewegung beziehungsweise Pendelbewegung zu ermöglichen.

Darüber hinaus kann ein Führungsbolzen vorgesehen sein, der den Aktor durchdringt. Vorteilhaft führt der Führungsbolzen die Bewegung des Aktors. Vorteilhaft erstreckt sich der Führungsbolzen zwischen den Gehäusewänden. Weiterhin vorteilhaft sind die Anziehelemente, insbesondere die als Blechelemente ausgebildeten Anziehelemente, über den Führungsbolzen mit dem Gehäuse verbunden.

In einer vorteilhaften Ausgestaltung umgeben die Federelemente den Führungsbolzen. Dadurch ist die Bewegung der Federelemente während ihrer Kompression und Dehnung geführt.

In einer vorteilhaften Ausgestaltung erstreckt sich der Führungsbolzen durch eine in den Aktor eingebrachte Öffnung hindurch.

Vorteilhaft ist der Führungsbolzen mit dem Gehäuse formschlüssig, kraftschlüssig und/oder stoffschlüssig verbunden. Weiterhin vorteilhaft weist das Gehäuse eine Öffnung auf, durch welche der Führungsbolzen in das Gehäuse einführbar ist, bis der Führungsbolzen an seinem freien Ende die gegenüberliegende Gehäusewand kontaktiert und mittels eines Befestigungselementes an der Gehäusewand festlegbar ist.

In einer vorteilhaften Ausgestaltung weist der Aktor zwei Gehäuseschalen auf, die den Elektromagneten aufnehmen. Bevorzugt sind die Gehäuseschalen mit Aussparungen versehen, die von dem Führungsbolzen, der die Federelemente führt, durchdrungen sind.

In einer vorteilhaften Ausgestaltung weist der Aktor einen Eisenkern und eine den Eisenkern umgebende Spule auf. Weiterhin vorteilhaft weist der Aktor Permanentmagnete auf, die beidseits des Eisenkerns angeordnet sind. Somit wird der Aktor vorteilhaft aus einem zentralen ferromagnetischen Kern, zwei Permanentmagneten auf den Stirnseiten des Kerns und eine den Kern und die Permanentmagneten außen umfassende Spule und einem Gehäuse, das die vorgenannten Komponenten außen umfasst, gebildet. Hierbei zeigen jeweils die gleichnamigen Pole der Permanentmagneten zum ferromagnetischen Kern hin. Wird nun ein Wechselstrom durch die außen umfassende Spule geleitet, wird das durch die Spule generierte Magnetfeld den Magnetfeldern der Permanentmagneten überlagert. Das bedeutet, dass abwechselnd das Magnetfeld des einen Magneten gestärkt und gleichzeitig das Magnetfeld des anderen Magneten geschwächt wird. Das kräftigere Magnetfeld generiert eine hohe Anziehungskraft, das schwache Magnetfeld eine kleine Anziehungskraft zwischen der Pendelvorrichtung und den Anziehelementen, die auch als Rückschlussplatten bezeichnet werden können. Ferromagnetische Werkstoffe werden von einem Magnetfeld angezogen, während diamagnetische Werkstoffe von einem Magnetfeld abgestoßen werden. Die so periodisch wechselnde Summenkraft erregt somit eine periodische Bewegung der kompletten Pendelvorrichtung umfassend Gehäuseschalen, Spule, Permanentmagneten und ferromagnetischem Kern. Vorteilhaft sind die Permanentmagneten derart angeordnet, dass sich jeweils gleichnamige Pole gegenüberliegen. Bewegt man so angeordnete Permanentmagnete aufeinander zu, stoßen sie sich ab.

In einer vorteilhaften Ausgestaltung ist der Eisenkern von einem Spulenträger umgeben, der die Spule aufnimmt. Dadurch wird eine sichere Befestigung der Spule an dem Eisenkern ermöglicht.

Nachfolgend werden der Schwingerreger sowie weitere Merkmale und Vorteile anhand eines Ausführungsbeispiels näher erläutert, das in den Figuren schematisch dargestellt ist. Hierbei zeigen:
- Fig. 1: einen Querschnitt durch einen Schwingerreger; und
- Fig. 2: einen Querschnitt durch den Schwingerreger entlang der Linie II-II in Fig. 1.

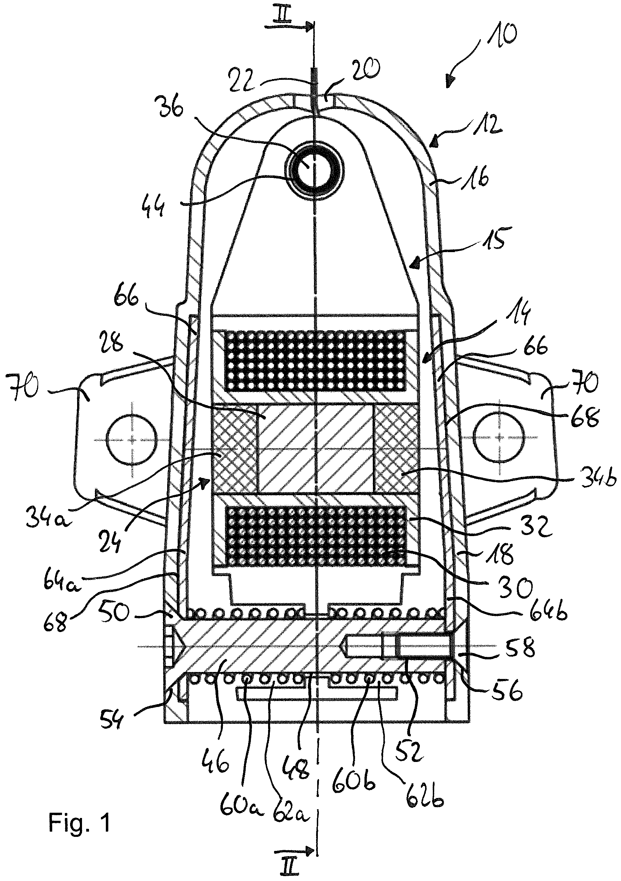

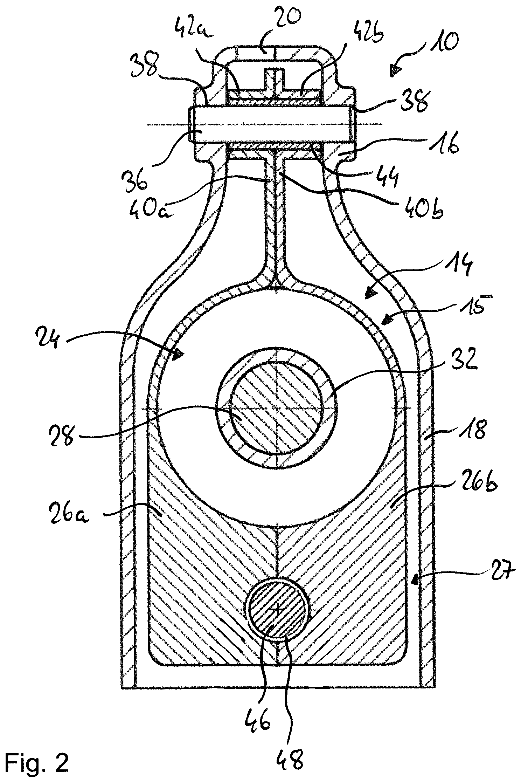

In den Figuren 1 und 2 ist ein Schwingerreger 10 gezeigt, der zur Erzeugung von Vibrationen in einer nicht dargestellten Nabe eines Kraftfahrzeuglenkrads einsetzbar ist, um beispielsweise während eines Sekundenschlafs oder während des Verlassens einer Fahrspur eine Warnfunktion zu realisieren.

Der Schwingerreger 10 weist ein Gehäuse 12 und einen Aktor 14 auf, der als eine Pendelvorrichtung 15 ausgebildet ist und hin und her bewegbar, insbesondere schwenkbar, innerhalb des Gehäuses 12 angeordnet ist, um Schwingungen zu erzeugen.

Das Gehäuse 12 weist einen Lagerabschnitt 16 zur Lagerung des Aktors 14, einen Aufnahmeabschnitt 18 zur Aufnahme des Aktors 14 und einen Durchlass 20 zur Hindurchführung eines elektrischen Anschlusses 22 auf.

Der Aktor 14 weist einen Elektromagneten 24, der mit dem elektrischen Anschluss 22 verbunden ist, und zwei Gehäuseschalen 26a, 26b auf, die den Elektromagneten 24 aufnehmen und die Funktion eines Ankers 27 übernehmen. Der Elektromagnet 24 umfasst einen Eisenkern 28 und eine den Eisenkern 28 umgebende Spule 30. Die Spule 30 ist von einem Spulenträger 32 aufgenommen, der den Eisenkern 28 umgibt.

Wie in Fig. 1 ersichtlich ist, sind beidseits des Eisenkerns 28 Permanentmagnete 34a, 34b angeordnet. Vorteilhaft sind die Permanentmagneten 34a, 34b derart angeordnet, dass sie sich gegenseitig abstoßen. Hierzu können beispielsweise die beiden Südpole der Permanentmagneten 34a, 34b aufeinander zu weisen. Ferner ist es auch denkbar, dass die beiden Nordpole der beiden Permanentmagneten 34a, 34b aufeinander zu weisen.

Wie insbesondere in Fig. 2 ersichtlich ist, ist der Aktor 14 innerhalb des Lagerabschnitts 16 schwenkbar um einen Stift 36 gelagert. Der Stift 36 ist in zwei in dem Lagerabschnitt 16 eingebrachte Löcher 38 eingesetzt, wobei sich der Stift 36 durch das Innere des Gehäuses 12, insbesondere des Lagerabschnitts 16, erstreckt. Zur Lagerung der Gehäuseschalen 26a, 26b an dem Stift 36 weisen die Gehäuseschalen 26a, 26b an ihrem freien Ende 40a, 40b jeweils einen hohlzylindrischen Abschnitt 42a, 42b auf, die den Stift 36 umgeben und zusammen einen Hohlzylinder bilden. Zur Reduzierung der Reibung während einer Pendelbewegung des Aktors 14 ist zwischen den hohlzylindrischen Abschnitten 42a, 42b und dem Stift 36 ein Gleitlager 44 angeordnet. Vorteilhaft ist das Gleitlager 44 in die Gehäuseschale 26a, 26b eingepresst.

Wie in Fig. 1 ersichtlich ist, ist innerhalb des Gehäuses 12 ein Führungsbolzen 46 angeordnet, der zur Führung der Pendelbewegung des Aktors 14 dient. Der Führungsbolzen 46 erstreckt durch eine in den Aktor 14 eingebrachte Öffnung 48, die aus zwei in die Gehäuseschalen 26a, 26b eingebrachte Vertiefungen gebildet ist. Der Führungsbolzen 46 ist formschlüssig und kraftschlüssig mit dem Gehäuse 12 verbunden. Hierzu weist der Führungsbolzen 46 an einem ersten Ende einen konischen Vorsprung 50 und an einem zweiten Ende eine Gewindebohrung 52 zum Einschrauben eines Befestigungselements auf. Zur Befestigung des Führungsbolzens 46 an dem Gehäuse 12 weist eine der Gehäusewände eine konisch geformte Einstecköffnung 54 auf, in welche der Führungsbolzen 42 eingeführt und durch die Öffnung 48 des Aktors 14 hindurchgeführt wird, bis der Führungsbolzen 42 die gegenüberliegende Gehäusewand kontaktiert und der konische Vorsprung 50 in der konischen Einstecköffnung 54 formschlüssig einliegt. Anschließend wird über eine in die gegenüberliegende Gehäusewand eingebrachte Befestigungsöffnung 56 ein Befestigungselement 58, insbesondere eine Schraube, in die Gewindebohrung 52 eingeschraubt.

Wie in Fig. 1 ersichtlich ist, ist der Führungsbolzen 46 von zwei Federelementen 60a, 60b, die vorliegend als Schraubenfedern ausgebildet sind, umgeben, die unter Vorspannung an dem Gehäuse 12, insbesondere an den Gehäusewänden, und dem Aktor 14, insbesondere den Gehäuseschalen 26a, 26b, anliegen. Die Gehäuseschalen 26a, 26b sind mit Aussparungen 62a, 62b versehen, in die die Federelemente 60a, 60b einliegen und den Aktor 14, insbesondere die Gehäuseschalen 26a, 26b, kontaktieren.

Beidseits des Elektromagneten 18 sind zudem Anziehelemente 64a, 64b aus einem ferromagnetischen Werkstoff angeordnet. Die Anziehelemente 64a, 64b sind vorliegend als Blechelemente 66 ausgebildet, die in Vertiefungen 68 des Gehäuses einliegen. Die Blechelemente 66 sind über den Führungsbolzen 46 mit dem Gehäuse 12 verbunden. Die Blechelemente 64 weisen darüber hinaus Befestigungsabschnitte 70 auf, die aus dem Gehäuse 12 herausragen und zur Befestigung des Schwingerregers 10 in einer nicht dargestellten Nabe eines Kraftfahrzeugs dienen.

Zur Erzeugung von Schwingungen wird der Elektromagnet 24 über den elektrischen Anschluss 22 mit Wechselstrom, insbesondere mit einer Frequenz von ca. 50 Hz, bestromt. Während der Bestromung des Elektromagneten 18 wird zunächst zwischen einem der Anziehelemente 62a, 62b eine magnetische Anziehungskraft erzeugt, die durch den Permanentmagneten 30a, 30b verstärkt wird, so dass der Aktor 14 in Richtung dieses Anziehelementes 62a, 62b angezogen wird. Währenddessen wird eines der Federelemente 60a, 60b komprimiert, während das andere Federelement 60a, 60b gedehnt wird. Bei einem Phasenwechsel bewegt sich der Elektromagnet 24 aufgrund der sich ändernden magnetischen Anziehungskräfte und Federkräfte in die entgegengesetzte Richtung. Dadurch wird eine Pendelbewegung des Aktors 14 realisiert. Die Federraten der Federelemente 60a, 60b und die Trägheit der beteiligten Pendelmassen bestimmen die Pendelfrequenz. Vorteilhaft beträgt die Pendeleigenfrequenz zwischen ca. 10 Hz und ca. 100 Hz, insbesondere zwischen ca. 40 Hz und ca. 60 Hz. Die vorgenannte Eigenfrequenz ist vorteilhaft ca. 10% höher als die Betriebsfrequenz einzustellen, wobei die Amplitude des Wechselstroms so zu wählen ist, dass ein Anschlagen des Aktors 14 an dem Gehäuse 12 vermieden wird.

### Bezugszeichenliste

- 10: Schwingerreger
- 12: Gehäuse
- 14: Aktor
- 15: Pendelvorrichtung
- 16: Lagerabschnitt
- 18: Aufnahmeabschnitt
- 20: Durchlass
- 22: elektrischer Anschluss
- 24: Elektromagnet
- 26a: Gehäuseschale
- 26b: Gehäuseschale
- 27: Anker
- 28: Eisenkern
- 30: Spule
- 32: Spulenträger
- 34a: Permanentmagnet
- 34b: Permanentmagnet
- 36: Stift
- 38: Löcher
- 40a: freies Ende
- 40b: freies Ende
- 42a: hohlzylindrischer Abschnitt
- 42b: hohlzylindrischer Abschnitt
- 44: Gleitlager
- 46: Führungsbolzen
- 48: Öffnung
- 50: konischer Vorsprung
- 52: Gewindebohrung
- 54: Einstecköffnung
- 56: Befestigungsöffnung
- 58: Befestigungselement
- 60a: Federelement
- 60b: Federelement
- 62a: Aussparung
- 62b: Aussparung
- 64a: Anziehelement
- 64b: Anziehelement
- 66: Blechelement
- 68: Vertiefung
- 70: Befestigungsabschnitt

## Patentansprüche

1. Schwingerreger (10) für ein Kraftfahrzeuglenkrad aufweisend ein Gehäuse (12) und einen Aktor (14), der zur Erzeugung von Schwingungen bewegbar innerhalb des Gehäuses (12) angeordnet ist, wobei der Aktor (14) einen Elektromagneten (24) aufweist, wobei dem Aktor (14) axial beabstandet zwei Anziehelemente (64a, 64b) aus einem ferromagnetischen Werkstoff zugeordnet sind, wobei zwischen dem Aktor (14) und den Anziehelementen (64a, 64b) derart eine magnetische Anziehungskraft erzeugbar ist, dass sich der Aktor (14) hin und her bewegt, und wobei sich der Aktor gegen die Kraft gegeneinander wirkender Federelemente (60a, 60b) hin und her bewegt, **dadurch gekennzeichnet, dass** der Aktor (14) als eine Pendelvorrichtung (15) ausgebildet ist.

2. Schwingerreger (10) nach Anspruch 1, **dadurch gekennzeichnet, dass** die die Pendelvorrichtung (15) eine Pendeleigenfrequenz aufweist, wobei die Pendeleigenfrequenz zwischen ca. 10 Hz und ca. 100 Hz beträgt.

3. Schwingerreger (10) nach einem der vorhergehenden Ansprüche, **dadurch gekennzeichnet, dass** die Federelemente (60a, 60b) als Schraubenfedern ausgebildet sind.

4. Schwingerreger (10) nach einem der vorhergehenden Ansprüche, **dadurch gekennzeichnet, dass** die Federelemente (60a, 60b) unter Vorspannung an dem Gehäuse (12) und dem Aktor (14) anliegen.

5. Schwingerreger (10) nach einem der vorhergehenden Ansprüche, **dadurch gekennzeichnet, dass** die Anziehelemente (64a, 64b) als Blechelemente (66) ausgebildet sind.

6. Schwingerreger (10) nach einem der vorhergehenden Ansprüche, **dadurch gekennzeichnet, dass** der Aktor (14) schwenkbar um einen Stift (36) gelagert ist.

7. Schwingerreger (10) nach einem der vorhergehenden Ansprüche, **dadurch gekennzeichnet, dass** ein Führungsbolzen (46) vorgesehen ist, der den Aktor (14) durchdringt.

8. Schwingerreger (10) Anspruch 7, **dadurch gekennzeichnet, dass** die Federelemente (60a, 60b) den Führungsbolzen (46) umgeben.

9. Schwingerreger (10) nach einem der vorhergehenden Ansprüche, **dadurch gekennzeichnet, dass** der Aktor (14) zwei Gehäuseschalen (26a, 26b) aufweist, die den Elektromagneten (24) aufnehmen.

10. Schwingerreger (10) nach einem der vorhergehenden Ansprüche, **dadurch gekennzeichnet, dass** der Elektromagnet (24) einen Eisenkern (28) und eine den Eisenkern (28) umgebende Spule (30) aufweist.

11. Schwingerreger (10) nach Anspruch 10, **dadurch gekennzeichnet, dass** der Aktor (14) Permanentmagnete (34a, 34b) aufweist, die beidseits des Eisenkerns (28) angeordnet sind.

12. Schwingerreger (10) nach Anspruch 10 oder 11, **dadurch gekennzeichnet, dass** der Eisenkern (28) von einem Spulenträger (32) umgeben ist, der die Spule (30) aufnimmt.

## Claims

1. Vibration generator (10) for a motor vehicle steering wheel, having a housing (12) and an actuator (14) which is arranged movably inside the housing (12) in order to generate vibrations, the actuator (14) having an electromagnet (24), the actuator (14) being associated with two axially spaced attracting elements (64a, 64b) made of a ferromagnetic material, wherein a magnetic attraction force can be generated between the actuator (14) and the attraction elements (64a, 64b) such that the actuator (14) moves back and forth, and wherein the actuator moves back and forth against the force of counteracting spring elements (60a, 60b), **characterised in that** the actuator (14) is constructed as a pendulum device (15).

2. Vibration generator (10) according to claim 1, **characterised in that** the pendulum device (15) has a pendulum natural frequency, the pendulum natural frequency being between approx. 10Hz and approx. 100Hz.

3. Vibration generator (10) according to any one of the preceding claims, **characterised in that** the spring elements (60a, 60b) are designed as helical springs.

4. Vibration generator (10) according to any one of the preceding claims, **characterised in that** the spring elements (60a, 60b) abut the housing (12) and the actuator (14) under prestress.

5. Vibration generator (10) according to any one of the preceding claims, **characterised in that** the attracting elements (64a, 64b) are designed as sheet metal elements (66).

6. Vibration generator (10) according to any one of the preceding claims, **characterised in that** the actuator (14) is mounted pivotably about a pin (36).

7. Vibration generator (10) according to any one of the preceding claims, **characterised in that** a guide bolt (46) is provided which penetrates the actuator (14).

8. Vibration generator (10) according to claim 7, **characterised in that** the spring elements (60a, 60b) surround the guide bolt (46).

9. Vibration generator (10) according to any one of the preceding claims, **characterised in that** the actuator (14) comprises two housing shells (26a, 26b) receiving the electromagnet (24).

10. Vibration generator (10) according to any one of the preceding claims, **characterised in that** the electromagnet (24) comprises an iron core (28) and a coil (30) surrounding the iron core (28).

11. Vibration generator (10) according to claim 10, **characterised in that** the actuator (14) has permanent magnets (34a, 34b) which are arranged on both sides of the iron core (28).

12. Vibration generator (10) according to claim 10 or 11, **characterised in that** the iron core (28) is surrounded by a coil carrier (32) which receives the coil (30).

## Revendications

1. Excitateur d'oscillations (10) pour un volant de véhicule automobile, comportant un boîtier (12) et un actionneur (14) qui est agencé de façon mobile à l'intérieur du boîtier (12) pour générer des oscillations,
dans lequel
l'actionneur (14) comprend un électroaimant (24),
deux éléments d'attraction (64a, 64b) en un matériau ferromagnétique sont associés à l'actionneur (14) en étant espacés axialement,
une force d'attraction magnétique peut être générée entre l'actionneur (14) et les éléments d'attraction (64a, 64b) de telle sorte que l'actionneur (14) se déplace en va-et-vient, et
l'actionneur se déplace en va-et-vient à l'encontre de la force d'éléments ressorts (60a, 60b) agissant l'un contre l'autre,
**caractérisé en ce que**
l'actionneur (14) est réalisé sous forme de dispositif pendulaire (15).

2. Excitateur d'oscillations (10) selon la revendication 1,
**caractérisé en ce que**
le dispositif pendulaire (15) présente une fréquence pendulaire propre, la fréquence pendulaire propre étant comprise entre environ 10 Hz et environ 100 Hz.

3. Excitateur d'oscillations (10) selon l'une des revendications précédentes,
**caractérisé en ce que**
les éléments ressorts (60a, 60b) sont réalisés sous forme de ressorts hélicoïdaux.

4. Excitateur d'oscillations (10) selon l'une des revendications précédentes,
**caractérisé en ce que**
les éléments ressorts (60a, 60b) s'appuient sous précontrainte contre le boîtier (12) et contre l'actionneur (14).

5. Excitateur d'oscillations (10) selon l'une des revendications précédentes,
**caractérisé en ce que**
les éléments d'attraction (64a, 64b) sont réalisés sous forme d'éléments en tôle (66).

6. Excitateur d'oscillations (10) selon l'une des revendications précédentes,
**caractérisé en ce que**
l'actionneur (14) est monté mobile en basculement autour d'une tige (36).

7. Excitateur d'oscillations (10) selon l'une des revendications précédentes,
**caractérisé en ce que**
il est prévu un goujon de guidage (46) qui traverse l'actionneur (14).

8. Excitateur d'oscillations (10) selon la revendication 7,
**caractérisé en ce que**
les éléments ressorts (60a, 60b) entourent le goujon de guidage (46).

9. Excitateur d'oscillations (10) selon l'une des revendications précédentes,
**caractérisé en ce que**
l'actionneur (14) comprend deux coques de boîtier (26a, 26b) qui logent l'électroaimant (24).

10. Excitateur d'oscillations (10) selon l'une des revendications précédentes,
**caractérisé en ce que**
l'électroaimant (24) comprend un noyau en fer (28) et une bobine (30) entourant le noyau en fer (28).

11. Excitateur d'oscillations (10) selon la revendication 10,
**caractérisé en ce que**
l'actionneur (14) comprend des aimants permanents (34a, 34b) qui sont agencés de part et d'autre du noyau en fer (28).

12. Excitateur d'oscillations (10) selon la revendication 10 ou 11,
**caractérisé en ce que**
le noyau en fer (28) est entouré par un porte-bobine (32) qui loge la bobine (30).
